# EUROPEAN PATENT SPECIFICATION

(11) **EP 2 377 730 B1**
(45) Date of publication and mention of the grant of the patent: **16.01.2019**
(21) Application number: 10159845.6
(22) Date of filing: 14.04.2010
(51) Int. Cl.: B60R 21/20

(54) **Airbag Module**
Airbagmodul
Module d'airbag

(43) Date of publication of application: 19.10.2011
(73) Proprietor: Volvo Car Corporation, 405 31 Göteborg (SE)
(72) Inventor: Rosenberg, Johan, 44332, Lerum (SE)
(74) Representative: Valea AB

(56) References cited:
- WO-A1-2008/105694
- US-A1- 2007 007 753

## Description

### TECHNICAL FIELD

The present invention relates to an airbag module for a vehicle.

### BACKGROUND OF THE INVENTION

Airbags are commonly used in vehicles in order to protect their occupants in case of an accident. For example, in order to protect a passenger of the front seat, an airbag may be mounted to a dashboard in front of the passenger. An airbag module is a module for storing the airbag under normal conditions and connecting it to the vehicle. The airbag module may be configured such that it comprises a cover forming part of the dashboard, or alternatively a cover hidden below a part of the dashboard. In any case, the cover and/or the part of the dashboard is/are configured to rupture in a predetermined way in order to provide an opening for the airbag to expand through during inflation.

During activation and inflation of the airbag, the airbag module may be subjected to rather strong forces. The cover is forced to open by the expanding airbag. There are also reaction forces from the gas generator of the airbag.

The airbag itself is normally stored in a housing, which is comprised in the airbag module. Originally the housings were typically made of a bent metal sheet. Nowadays they are often made of injection moulded plastic. The housing is typically attached to a stiff frame in the dashboard by means of a stiff intermediate collar forming a frame around the housing. The attachment is fixed in all directions and may transfer forces and torsional moments. The demands on the airbag housing and its attachment to the dashboard to be able to withstand the abovementioned forces during activation and inflation set requirements for dimensions and material properties.

Recently, airbag housings made of fabrics have been proposed. The transition towards lighter material has made it possible to reduce the weight of the airbag module. However, even if the housing is made of fabric, a collar or a frame of a stiffer and heavier material is still used for reinforcing the housing and attaching the airbag module to the dashboard.

US 2007/0007753 A1 discloses a housing for an airbag module that contains an inflatable airbag cushion in a compacted configuration before being inflated by inflation gas supplied by an inflator device. The housing includes a collar for attaching the housing to a vehicle and a chute assembly formed of a flexible material and secured to the collar.

### SUMMARY OF THE INVENTION

The object of the present invention is to overcome or ameliorate at least one of the disadvantages of the prior art, or to provide a useful alternative.

It is desirable to reduce the weight of the air bag module as compared to today.

It is further desirable to reduce the number of components in the airbag module, as well as to make the airbag module quicker and easier to mount in the vehicle.

The object above may be achieved by the invention according to claim 1.

In a first aspect of the present invention there is provided an airbag module for a vehicle comprising
- a housing, forming a storage space for an airbag, the housing having an opening arranged such that the airbag inflates through the opening if activated, the opening defining a circumferential path,
- a housing retaining member, attachable to the housing around at least part of the opening,
- a housing fixing member, fixable to a dashboard of the vehicle, and further being attachable to the housing retaining member.

The housing fixing member is arranged to surround the opening when attached to the housing by means of the housing retaining member, thereby forming an attachment between the housing fixing member and the housing. The attachment between the housing fixing member and the housing is fixed in the main inflation direction of the airbag, such that forces in the direction occurring during airbag inflation are transferable from the housing to the housing fixing member. The housing retaining member allows relative movement between the housing and the housing fixing member along the circumferential path, such that substantially no sideways force and/or torsional moment is/are transferable during airbag inflation.

An airbag module according to the invention comprises fewer components than the ones conventionally used. It is easier and quicker to mount in the vehicle. It weighs less than the ones conventionally used. It may further allow for larger production tolerances than conventional airbag modules.

Preferably the allowed relative movement distance is at least 5 mm, preferably 10 mm and most preferably at least 15 mm. Due to the allowed relative movement, essentially no forces or torsional moments are transferable between the housing and the housing fixing member along the circumferential path, not even during inflation. Preferably, the housing is more flexible than the housing retaining member in a circumferential direction, i.e. the direction along the circumferential path. With the suggested configuration the housing does not need to be able to keep its shape during inflation. The housing retaining member anyhow secures its attachment to the housing fixing member.

The opening of the housing may be covered during normal storage of the airbag in the vehicle or during transport of the airbag. The housing may itself form a closed space for the airbag, totally enclosing the airbag. In that case a portion of the housing is preferably prearranged to break in a predetermined manner to let the airbag through during inflation. However, according to the invention, there is no need for the housing to form a closed space; the opening of the housing may be open also during normal storage and transport.

During activation of the airbag, there are two main forces: The first is pressure on the cover, up to 500kPa, corresponding to an instantaneous force of 15 kN. Purely as an example, if the housing retaining member has six attachments to the housing fixing member, each attachment will bear about 2.5 kN. The second are reaction forces from the gas generator. These depend on the stiffness of the attachment of the gas generator to the vehicle, e.g. a cross-beam, but may be up to 4 kN. As a comparison, the forces along the circumferential path may be up to around 500 N.

The size of the airbag module may be between 75-500 mm in the cross direction of the vehicle, and 60-250 mm in the longitudinal direction of the vehicle.

In an embodiment of the invention, the housing retaining member forms a reinforcement of the housing around the opening. The necessary strength needed for the attachment to the housing fixing member may thereby be provided by the housing retaining member. No extra collar or frame, such as the one used in a conventional air bag module, is needed.

The housing retaining member may be integrated into the housing or into the housing fixing member. The housing retaining member may be formed as an integral part of the housing or of the housing fixing member. They may in that case be produced by injection moulding technology together in the same tool. As an alternative, the housing retaining member may be located at least partly within the housing or the housing fixing member, i.e. the housing or the housing fixing member at least partly encloses the housing retaining member.

The housing retaining member may be an elongated member, such as a metal wire, a plastic wire, a stamped metal piece or a piece of injection moulded plastic. By elongated is meant that it is much longer than wide, preferably at least 5 times, more preferably at least 10 times. The housing retaining member may be formed by a single elongated member or by a plurality of elongated members, arranged one after another around the circumferential path when the airbag module is mounted in the vehicle.

In a preferred embodiment, the housing retaining member forms a closed circumference along the opening of the housing, when mounted in the housing. It may for example be in the form of a wire enclosing the opening.

The housing retaining member may extend at least partly in a channel or through a series of consecutive holes formed in the housing, when mounted in the housing. This is especially applicable when the housing retaining member is an elongated member. In this manner the housing is attached to the housing retaining member in a way which permits relative movement between the housing and the housing retaining member.

The channel may comprise interruptions exposing the housing retaining member. Thereby it is possible to attach the housing fixing member directly to the housing retaining member.

In an embodiment, the housing is attachable to the housing fixing member by means of the housing retaining member along between 1% and 95% of the circumference of the opening, preferably between 2% and 50%, more preferably between 3% and 40%, and most preferably between 5% and 20%.

In an embodiment, the housing fixing member further forms a lid extending over the opening of the airbag. Thereby the number of parts is reduced. There is further no need to provide the housing itself with a cover for the opening, neither as a separate cover nor as a part of the housing.

In a preferred embodiment the housing is formed of a flexible material such as fabric or plastic, the flexible material allowing relative movement between the housing and the housing fixing member along the circumferential path. Forces in the inflation direction of the airbag are transferred by means of the housing retaining member. By flexible is meant that the housing is not intended to be strong enough to keep its shape when the airbag is inflated. This is not a requirement of the invention, since relative movement in the circumferential direction is allowed. The term flexible is in this context related to the state of the housing during inflation of the airbag. For example, a housing made of plastic may be relatively stiff under normal conditions, but when the airbag is inflated, it will flex and deform due to the high forces involved. Other materials, such as fabric, are flexible both in the normal state and during inflation.

Normally the housing is more flexible than the housing retaining member in the circumferential direction, i.e. the housing retaining member is more rigid than the housing at least in the circumferential direction. In conventional airbag modules, the abovementioned collar or frame normally is stiff in all directions, thereby being able to transfer forces and torsional moments. In such embodiments of the invention, wherein the housing retaining member is an elongated member, such as a metal wire, a plastic wire, a stamped metal piece or a piece of injection moulded plastic, the elongated member is typically rigid in its length direction.

The housing retaining member and the housing fixing member may be attachable to each other by means of one or more snap fits, the snap fits being located in the housing fixing member and/or the housing retaining member. The number of snap fits may be 3-25, preferably 5-15 and most preferably 6-12. They are distributed around the circumference, equidistantly or with varying distances in between. They can for example be arranged such that the distances between the snap fits are shorter for portions of the circumference where higher forces are expected during inflation. By using snap fits, it is easy and quick to mount the airbag module in the vehicle, but other attachment means, such as screws, nut and bolts, clips, or combinations thereof, are also feasible.

In an embodiment, the snap fit/fits is/are located in the housing fixing member being arranged to snap around the housing retaining member, e.g. in the form of the elongated member. The snap fit/fits may then be arranged to attach directly to the elongated member, i.e. with nothing in between. For example, if the housing is of fabric and the housing retaining member a wire, the snap fit grips around the wire, without any fabric in between. This facilitates the allowed relative movement along the circumferential path.

### BRIEF DESCRIPTION OF THE DRAWINGS

The present invention will hereinafter be further explained by means of non-limiting examples with reference to the appended figures wherein:
- Fig. 1: is an airbag module according to prior art I comprising a plastic housing;
- Fig. 2: is another airbag module according to prior art II comprising a fabric housing in exploded view;
- Fig. 3: is an exploded partly cross-sectional view of an airbag module according to a first embodiment of the invention;
- Fig. 4: is a schematic partly cross-sectional view of the airbag module of Fig. 3 when mounted;
- Fig. 5: is a detailed cross-sectional view of the attachment of Fig. 4;
- Fig. 6: is a perspective view of a housing of an airbag module according to a second embodiment of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

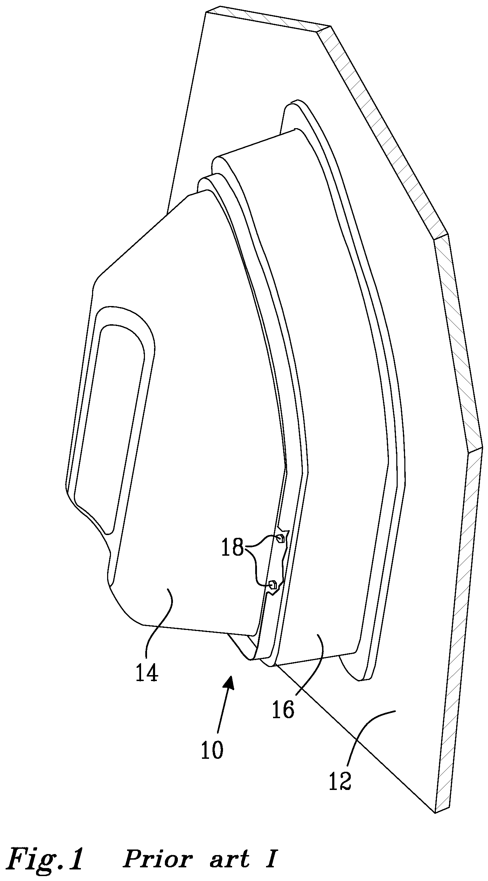

Figure 1 schematically illustrates an airbag module 10 according to known technology mounted to the dashboard 12 of a vehicle. The airbag module comprises a housing 14 and a collar 16. The housing 14 is adapted to store an airbag (not seen). The housing 14 is made of a stiff material, typically injection moulded plastic or of metal sheet, and the collar 16 is typically made of a metal, e.g. steel. The housing 14 is attached to the dashboard via the collar 16. An attachment means 18, e.g. nut and bolt connections, screws or clips, fixes the airbag module 10 to the dashboard 12 giving a connection between the housing 14 and the dashboard 12. Although only two attachment means are shown in Figure 1, they are normally distributed along the circumference of the collar 16. The connection is fixed in all directions when the airbag module is mounted in the vehicle, i.e. the housing 14 cannot be moved relative to the dashboard in any direction 12 without breaking the connection, not even during inflation of the airbag. The attachment means can normally be released, e,g. by unscrewing, but this is normally only done when it is desired to remove the airbag from the vehicle. The fixed connection is further able to transfer forces and torsional moments in various directions. The collar 16 and the attachment means 18 are dimensioned to resist the forces that occur during inflation, which may be up to 15 kN. Normally, the dashboard 12 is reinforced around the opening of the airbag module, for example by a metal sheet, in order to be able to resist such forces.

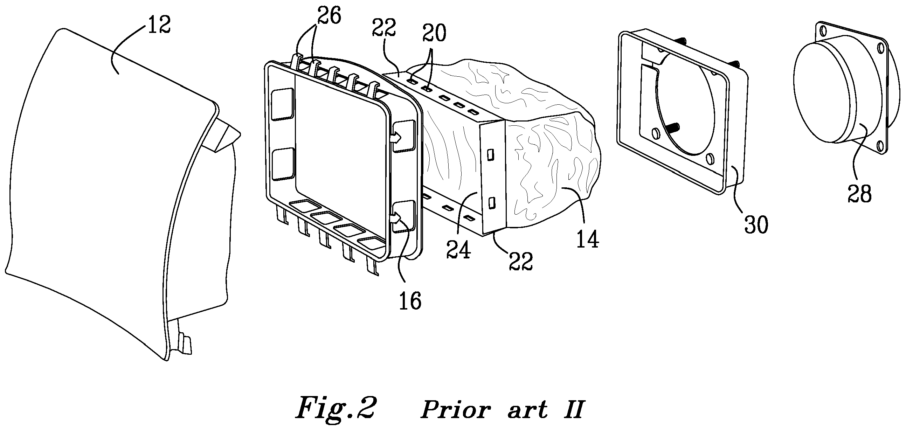

Figure 2 is an exploded view of an alternative prior art solution II. In this case, the housing 14 is made of fabric. The collar 16 is stiff, e.g. made of metal. The airbag itself is stored in the housing having a housing lid 24 and cannot be seen. The fabric of the housing 14 is provided with apertures 20 at an upper portion 22 being an extension of the wall of the housing and protruding above the housing lid 24. The collar 16 is provided with hooks 26 corresponding to the apertures 20 of the housing 14. The housing 14 is mounted to the collar 16 by wrapping the fabric of the upper portion 22 around the collar 16 and sticking the hooks 26 through the corresponding apertures 20. Each hook 26 has a corresponding aperture 20. This kind of connection is able to transfer force between the housing 14 and the collar 16 both in the inflation direction and perpendicular to that up to an amount determined by the fabric properties, but due to the fabric properties, torsional moments are normally not transferred. The hooks 26 are made of stiff material. Even if the apertures 20 are slightly larger than the hooks 26, there is substantially no relative movement allowed between the housing 14 and the collar 16, not even during inflation of the airbag. The collar 16 is fixedly connected to the dashboard 12. Figure 2 further illustrates an inflator 28 and a guiding member 30.

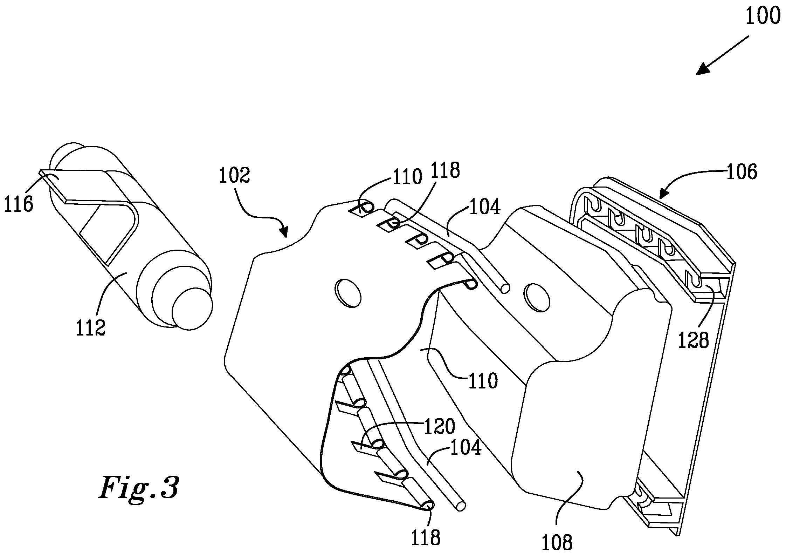

Figure 3 illustrates an airbag module 100 according to a first embodiment of the present invention. The airbag module comprises a housing 102, a housing retaining member 104 and a housing fixing member 106. The housing 102 forms a storage space for an airbag 108. The airbag 108 may be delivered as a part of the airbag module 100 or may be a separate unit. The housing 102 has an opening 110 arranged such that the airbag inflates through the opening 110 if activated. The opening 110 defines a circumferential path, i.e. the path extending around the circumference of the opening 110. The housing retaining member 104 is attachable to the housing 102 around at least part of the opening 110. The housing fixing member 106 is fixable to a dashboard of the vehicle. The housing fixing member 106 surrounds the opening 110 when attached to the housing 102 by means of the housing retaining member 104, thereby forming an attachment between the housing fixing member 106 and the housing 102.

Figure 3 further illustrates a gas cartridge 112 for providing gas during inflation of the airbag 108 and a beam attachment member 116 for attachment to the vehicle structure, e.g. a cross beam. These may be comprised as a part of the airbag module or may be separate units. Further, additional guiding members may also be included in the air bag module.

The housing 102 is made of a flexible material, such as a fabric, e.g. woven or warp-knitted, a film, a reinforced film, a net structure or a thin-walled injection moulded structure. Suitable materials are polymers, such as polyamide, polypropylene, polybutylene-terephthalate or polyethylene-terephthalate, for example in the form of yarns or films, or metal wires. The thickness of the flexible material may be between 0.2 and 2 mm, preferably between 0.5 and 1 mm.

A channel 118 is formed along the opening 110 of the housing 102. The channel 118 is adapted to receive the housing retaining member 104, which may be an elongated member, for example a metal wire as in the illustrated embodiment, a plastic wire, a stamped metal piece or a piece of injection moulded plastic. Preferably, the housing retaining member 104 forms a loop around the whole opening 110. Since the housing retaining member 104 in this way is incorporated into the housing 102, the housing 102 is reinforced along its rim. The channel 118 may form a continuous channel or may be intermittent, i.e. having interruptions 120 in the fabric as illustrated here. Thereby the housing retaining member 104 is exposed in the interruptions 120.

When comparing an airbag module according to the invention with prior art, it is especially to be noted that there is no need for a collar 16. This results in reduced weight.

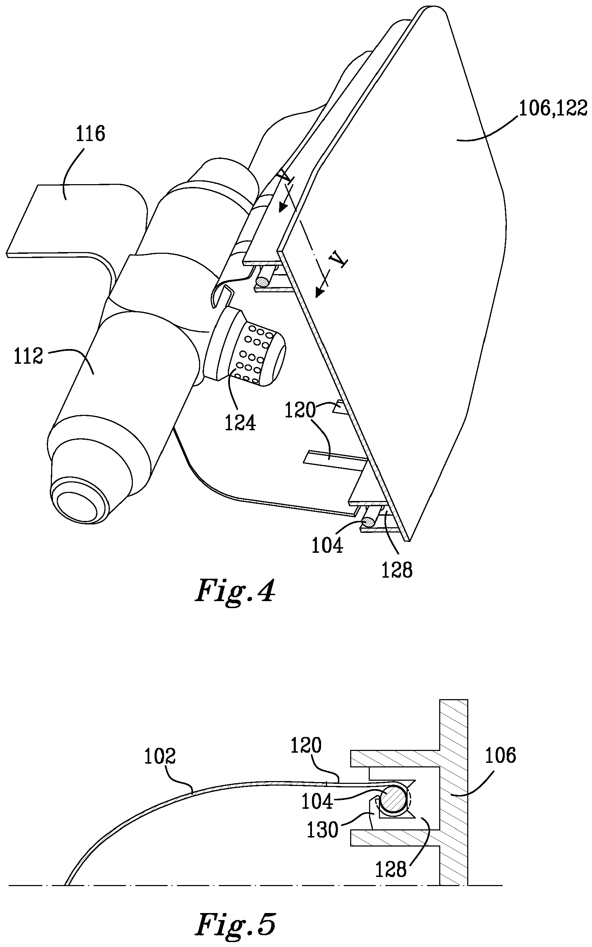

In Figure 4, the different parts of the airbag module 100 of Figure 3 are mounted to each other. The housing retaining member 104, here a wire, is located in the channel 118 of the housing 102. The housing retaining member 104 is connected to the housing fixing member 106, which is described more detailedly in conjunction with Figure 5. The housing fixing member 106 forms a lid 122 covering the opening 110 of the housing 102. The lid 122 may be separate, but is preferably an integral part of the housing fixing member 106, as illustrated, in order to keep the number of parts down. The lid 122 preferably has predefined rupture zones, so that it ruptures in a predetermined way to let the inflating airbag 108 through. Figure 4 also illustrates the gas cartridge 112, the beam attachment member 116 and an inflator 124.

Figure 5 shows in closer detail how the housing 102 is connected to the housing fixing member 106 by means of the housing retaining member 104. Figure 5 is a cross-section along V-V of Figure 4. The housing retaining member 104, here the wire, passes through the intermittent channel 118 of the housing 102. The housing fixing member 106 is provided with attachment means having locations corresponding to the interruptions 120 of the channel 118. As can be gleaned from Figure 5, the attachment means comprises a snap fit 128. The tongue 130 of the snap fit is made of resilient material, such that it springs back into position after the wire 104 has been inserted when mounting the airbag module 100. The snap fits 128 provide a quick and easy way for mounting the airbag module 100 to the dashboard 12. No special mounting tools are needed.

The interruptions 120 of the channel 118 are wider than the width of the snap fits 128. This permits relative moment between the housing 102 and the housing fixing member 106 along the circumferential path. Preferably the allowed moving distance is at least 5 mm, preferably 10 mm and most preferably at least 15 mm. Due to the allowed relative movement, substantially no forces or torsional moments are transferable between the housing 102 and the housing fixing member 106, not even during inflation. Preferably, the housing 102 is more flexible than the housing retaining member 104, e.g. the wire, in the circumferential direction. Moreover, forces in the main inflation direction are transferable from the housing 102 to the housing fixing member 106 via the snap fits 128. The fabric should be strong enough to withstand those forces.

The airbag 108 may be activated and inflated in case of an accident, i.e. when a sensing system of the vehicle detects an accident of sufficient magnitude. The airbag 108 is then inflated, i.e. filled with gas. It exerts a pressure on the lid 122, which ruptures along predefined rupture lines, such that the expanding airbag 108 is let through. The beam attachment 116 is subjected to reaction forces. Since the housing 102 is flexible, it may adapt to the shape of the expanding airbag 108. The forces in the inflation direction are transferred from the housing 102 via the snap fits 128 to the housing fixing member 106. The dashboard 12 may be arranged to have a frame surrounding the housing fixing member 106 if desired to be able to take up the forces without deforming the dashboard 12. Further, since the housing 102 is allowed to move along the circumferential path, in the first embodiment along the wire, substantially no forces or torsional moments are taken up in that direction.

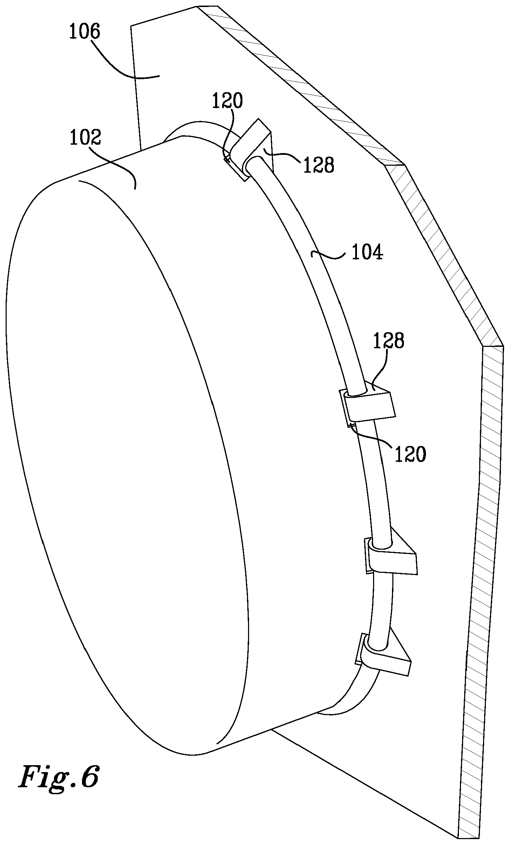

Figure 6 illustrates the housing 102 and the housing retaining member 104 of an airbag module according to a second embodiment of the present invention. Purely as an example, the housing fixing member 106 is illustrated as an integral part of the dashboard. The housing 102 is made of plastic, e.g. injection moulded plastic. The housing retaining member 104 is an integrated part of the housing 102. They could for example be injection moulded together in the same tool. The housing 102 is provided with interruptions 120 providing access to the housing retaining member 104. The snap fits 128 grip around the housing retaining member 104 in the interruptions 120. As for the first embodiment, the interruptions 120 of the channel 118 are wider than the widths of the snap fits 128, which allows relative moment between the housing 102 and the housing fixing member 106 to take place along the circumferential path. Preferably, the housing 102 is more flexible than the housing retaining member 104 in the circumferential direction. Substantially no forces or torsional moments are transferable between the housing 102 and the housing fixing member 106, not even during inflation.

Further modifications of the invention within the scope of the appended claims are feasible. As such, the present invention should not be considered as limited by the embodiments and figures described herein. Rather, the full scope of the invention should be determined by the appended claims, with reference to the description and drawings.

Although the enclosed embodiments illustrate passenger airbag modules, the airbag module according to the invention may also be used for another airbag of a vehicle, e.g. a knee airbag, a driver airbag or a side impact airbag.

## Claims

1. An airbag module (100) for a vehicle comprising
- a housing (102), forming a storage space for an airbag (108), said housing (102) having an opening (110) arranged such that said airbag inflates through said opening (110) if activated, said opening (110) defining a circumferential path,
- a housing retaining member (104), attachable to said housing (102) around said opening (110),
- a housing fixing member (106), fixable to a dashboard (12) of said vehicle, and further being attachable to said housing retaining member (104), said housing fixing member (106) being arranged to surround said opening (110) when attached to said housing (102) by means of said housing retaining member (104), thereby forming an attachment between said housing fixing member (106) and said housing (102),
wherein said attachment between said housing fixing member (106) and said housing (102) is fixed in the main inflation direction of said airbag (108), such that forces in said direction occurring during airbag inflation are transferable from said housing (102) to said housing fixing member (106), and
said housing retaining member (104) allowing relative movement between said housing (102) and said housing fixing member (106) along said circumferential path, such that substantially no sideways force and/or torsional moment is/are transferable between said housing (102) and said housing fixing member (106) during airbag inflation.

2. The airbag module (100) according to claim 1, wherein said housing retaining member (104) forms a reinforcement of said housing (102) around said opening (110).

3. The airbag module (100) according to any one of the preceding claims, wherein said housing retaining member (104) is integrated into said housing (102) or into said housing fixing member (106).

4. The airbag module (100) according to any one of the preceding claims, wherein said housing retaining member (104) is an elongated member such as a metal wire, a plastic wire, a stamped metal piece or a piece of injection moulded plastic.

5. The airbag module (100) according to any one of the preceding claims, wherein said housing retaining member (104) forms a closed circumference along said opening (110) of said housing (102), when mounted in said housing (102).

6. The airbag module (100) according to any one of the preceding claims, wherein said housing retaining member (104) extends at least partly in a channel (118) or through a series of consecutive holes formed in said housing (102), when mounted in said housing (102).

7. The airbag module (100) according to claim 6, wherein said channel (118) comprises interruptions (120) exposing said housing retaining member (104).

8. The airbag module (100) according to any one of the preceding claims, wherein said housing (102) is attachable to said housing fixing member (106) by means of said housing retaining member (104) along between 1% and 95% of the circumference of said opening (110), preferably between 2% and 50%, more preferably between 3% and 40%, and most preferably between 5% and 20%.

9. The airbag module (100) according to any one of the preceding claims, wherein said housing fixing member (106) further forms a lid (122) extending over said opening (110).

10. The airbag module (100) according to any one of the preceding claims, wherein said housing (102) is formed of a flexible material such as fabric or plastic, said flexible material allowing relative movement between said housing (102) and said housing fixing member (106) along said circumferential path.

11. The airbag module (100) according to any one of the preceding claims, wherein said housing retaining member (104) and said housing fixing member (106) are attachable to each other by means of one or more snap fits (128), said snap fits (128) being located in said housing fixing member (106) and/or said housing retaining member (104).

12. The airbag module (100) according to claim 11, when dependent on claim 4, wherein said one or more snap fits (128) are located in said housing fixing member (106) and are arranged to snap around said elongated member.

13. The airbag module (100) according to claim 12, wherein said one or more snap fits (128) are directly attachable to said elongated member.

## Patentansprüche

1. Airbagmodul (100) für ein Fahrzeug, umfassend:
- ein Gehäuse (102), das einen Stauraum für einen Airbag (108) bildet, wobei das Gehäuse (102) eine Öffnung (110) aufweist, die so angeordnet ist, dass sich der Airbag bei Aktivierung durch die Öffnung (110) aufbläht, wobei die Öffnung (110) einen Umfangsweg festlegt,
- ein Gehäusehalteelement (104), das um die Öffnung (110) herum an dem Gehäuse (102) anbringbar ist,
- ein Gehäusebefestigungselement (106), das an einem Armaturenbrett (12) des Fahrzeugs befestigbar ist und ferner an dem Gehäusehalteelement (104) anbringbar ist, wobei das Gehäusebefestigungselement (106) so angeordnet ist, dass es die Öffnung (110) umgibt, wenn es mit Hilfe des Gehäusehalteelements (104) an dem Gehäuse (102) angebracht ist, wodurch eine Halterung zwischen dem Gehäusebefestigungselement (106) und dem Gehäuse (102) gebildet ist,
wobei
die Halterung zwischen dem Gehäusebefestigungselement (106) und dem Gehäuse (102) auf eine solche Weise in der Hauptaufblähungsrichtung des Airbags (108) befestigt ist, dass bei einer Aufblähung des Airbags in der Richtung auftretende Kräfte von dem Gehäuse (102) auf das Gehäusebefestigungselement (106) übertragbar sind, und
das Gehäusehalteelement (104) eine relative Bewegung zwischen dem Gehäuse (102) und dem Gehäusebefestigungselement (106) entlang dem Umfangsweg auf eine solche Weise ermöglicht, dass während einer Aufblähung des Airbags im Wesentlichen keine seitliche Kraft und/oder kein Drehmoment zwischen dem Gehäuse (102) und dem Gehäusebefestigungselement (106) übertragbar sind/ist.

2. Airbagmodul (100) nach Anspruch 1, wobei das Gehäusehalteelement (104) eine Verstärkung des Gehäuses (102) um die Öffnung (110) herum bildet.

3. Airbagmodul (100) nach einem der vorhergehenden Ansprüche, wobei das Gehäusehalteelement (104) in dem Gehäuse (102) oder in dem Gehäusebefestigungselement (106) integriert ist.

4. Airbagmodul (100) nach einem der vorhergehenden Ansprüche, wobei das Gehäusehalteelement (104) ein längserstrecktes Element ist, wie zum Beispiel ein Metalldraht, ein Kunststoffdraht, ein geprägtes Metallteil oder ein Teil aus spritzgegossenem Kunststoff.

5. Airbagmodul (100) nach einem der vorhergehenden Ansprüche, wobei das Gehäusehalteelement (104) einen geschlossenen Umfang entlang der Öffnung (110) des Gehäuses (102) bildet, wenn es in dem Gehäuse (102) montiert ist.

6. Airbagmodul (100) nach einem der vorhergehenden Ansprüche, wobei sich das Gehäusehalteelement (104) wenigstens zum Teil in einem Kanal (118) oder durch eine Reihe von aufeinander folgenden Löchern, die/gebildet in dem Gehäuse (102) sind, erstreckt, wenn es in dem Gehäuse (102) montiert ist.

7. Airbagmodul (100) nach Anspruch 6, wobei der Kanal (118) Unterbrechungen (120) umfasst, die das Gehäusehalteelement (104) freilegen.

8. Airbagmodul (100) nach einem der vorhergehenden Ansprüche, wobei das Gehäuse (102) mit Hilfe des Gehäusehalteelements (104) entlang zwischen 1% und 95% des Umfangs der Öffnung (110), vorzugsweise zwischen 2% und 50%, insbesondere zwischen 3% und 40% und besonders bevorzugt zwischen 5% und 20% desselben an dem Gehäusebefestigungselement (106) anbringbar ist.

9. Airbagmodul (100) nach einem der vorhergehenden Ansprüche, wobei das Gehäusebefestigungselement (106) ferner einen Deckel (122) bildet, der sich über die Öffnung (110) erstreckt.

10. Airbagmodul (100) nach einem der vorhergehenden Ansprüche, wobei das Gehäuse (102) aus einem flexiblen Material, wie zum Beispiel Gewebe oder Kunststoff, gebildet ist, wobei das flexible Material eine relative Bewegung zwischen dem Gehäuse (102) und dem Gehäusebefestigungselement (106) entlang dem Umfangsweg ermöglicht.

11. Airbagmodul (100) nach einem der vorhergehenden Ansprüche, wobei das Gehäusehalteelement (104) und das Gehäusebefestigungselement (106) mit Hilfe einer oder mehrerer Schnappverbindungen (128) aneinander anbringbar sind, wobei sich die Schnappverbindungen (128) in dem Gehäusebefestigungselement (106) und/oder dem Gehäusehalteelement (104) befinden.

12. Airbagmodul (100) nach Anspruch 11 bei Abhängigkeit von Anspruch 4, wobei sich die eine oder die mehreren Schnappverbindungen (128) in dem Gehäusebefestigungselement (106) befinden und so angeordnet sind, dass sie um das längserstreckte Element einschnappen.

13. Airbagmodul (100) nach Anspruch 12, wobei die eine oder die mehreren Schnappverbindungen (128) direkt an dem längserstreckten Element anbringbar sind.

## Revendications

1. Module d'airbag (100) pour un véhicule, comprenant :
- un boîtier (102), formant un espace de rangement pour un airbag (108), ledit boîtier (102) ayant une ouverture (110) disposée de telle sorte que ledit airbag se gonfle à travers ladite ouverture (110) lorsqu'il est activé, ladite ouverture (110) définissant une trajectoire circonférentielle,
- un organe de retenue de boîtier (104), pouvant être attaché audit boîtier (102) autour de ladite ouverture (110),
- un organe de fixation de boîtier (106) pouvant être fixé à un tableau de bord (12) dudit véhicule, et pouvant en outre être attaché audit organe de retenue de boîtier (104), ledit organe de fixation de boîtier (106) étant prévu pour entourer ladite ouverture (110) lorsqu'il est attaché audit boîtier (102) au moyen dudit organe de retenue de boîtier (104), en formant ainsi une fixation entre ledit organe de fixation de boîtier (106) et ledit boîtier (102),
ladite fixation entre ledit organe de fixation de boîtier (106) et ledit boîtier (102) étant fixée dans la direction de gonflage principale dudit airbag (108) de telle sorte que des forces dans ladite direction se produisant lors du gonflage de l'airbag puissent être transférées dudit boîtier (102) audit organe de fixation de boîtier (106), et
ledit organe de retenue de boîtier (104) permettant un mouvement relatif entre ledit boîtier (102) et ledit organe de fixation de boîtier (106) le long de ladite trajectoire circonférentielle de telle sorte que sensiblement aucune force latérale et/ou aucun couple de torsion ne puissent être transférés entre ledit boîtier (102) et ledit organe de fixation de boîtier (106) lors du gonflage de l'airbag.

2. Module d'airbag (100) selon la revendication 1, dans lequel ledit organe de retenue de boîtier (104) forme un renforcement dudit boîtier (102) autour de ladite ouverture (110).

3. Module d'airbag (100) selon l'une quelconque des revendications précédentes, dans lequel ledit organe de retenue de boîtier (104) est intégré dans ledit boîtier (102) ou dans ledit organe de fixation de boîtier (106).

4. Module d'airbag (100) selon l'une quelconque des revendications précédentes, dans lequel ledit organe de retenue de boîtier (104) est un organe allongé tel qu'un fil métallique, un fil en plastique, une pièce métallique estampée ou une pièce en plastique moulée par injection.

5. Module d'airbag (100) selon l'une quelconque des revendications précédentes, dans lequel ledit organe de retenue de boîtier (104) forme une circonférence fermée le long de ladite ouverture (110) dudit boîtier (102), lorsqu'il est monté dans ledit boîtier (102).

6. Module d'airbag (100) selon l'une quelconque des revendications précédentes, dans lequel ledit organe de retenue de boîtier (104) s'étend au moins en partie dans un canal (118) ou à travers une série de trous consécutifs formés dans ledit boîtier (102), lorsqu'il est monté dans ledit boîtier (102).

7. Module d'airbag (100) selon la revendication 6, dans lequel ledit canal (118) comprend des interruptions (120) exposant ledit organe de retenue de boîtier (104).

8. Module d'airbag (100) selon l'une quelconque des revendications précédentes, dans lequel ledit boîtier (102) peut être attaché audit organe de fixation de boîtier (106) au moyen dudit organe de retenue de boîtier (104) sur entre 1 % et 95 % de la circonférence de ladite ouverture (110), de préférence entre 2 % et 50 %, plus préférablement entre 3 % et 40 %, et le plus préférablement entre 5 % et 20 %.

9. Module d'airbag (100) selon l'une quelconque des revendications précédentes, dans lequel ledit organe de fixation de boîtier (106) forme en outre un couvercle (122) s'étendant par-dessus ladite ouverture (110).

10. Module d'airbag (100) selon l'une quelconque des revendications précédentes, dans lequel ledit boîtier (102) est formé en un matériau flexible tel qu'un tissu ou du plastique, ledit matériau flexible permettant un mouvement relatif entre ledit boîtier (102) et ledit organe de fixation de boîtier (106) le long de ladite trajectoire circonférentielle.

11. Module d'airbag (100) selon l'une quelconque des revendications précédentes, dans lequel ledit organe de retenue de boîtier (104) et ledit organe de fixation de boîtier (106) peuvent être attachés l'un à l'autre au moyen d'un ou plusieurs encliquetages (128), lesdits encliquetages (128) étant situés dans ledit organe de fixation de boîtier (106) et/ou dans ledit organe de retenue de boîtier (104).

12. Module d'airbag (100) selon la revendication 11 lorsqu'elle dépend de la revendication 4, dans lequel ledit ou lesdits encliquetages (128) sont situés dans ledit organe de fixation de boîtier (106) et sont disposés de manière à s'encliqueter autour dudit organe allongé.

13. Module d'airbag (100) selon la revendication 12, dans lequel ledit ou lesdits encliquetages (128) peuvent être attachés directement audit organe allongé.
